(19) Europäisches Patentamt
European Patent Office
Office européen des brevets

(11) **EP 3 623 435 A1**

(12) **EUROPEAN PATENT APPLICATION**
published in accordance with Art. 153(4) EPC

(43) Date of publication:
**18.03.2020 Bulletin 2020/12**

(51) Int Cl.:
***C09D 167/00*** *(2006.01)*     ***B05D 7/14*** *(2006.01)*
***B05D 7/24*** *(2006.01)*      ***C09D 5/02*** *(2006.01)*

(21) Application number: **18798527.0**

(22) Date of filing: **10.05.2018**

(86) International application number:
**PCT/JP2018/018208**

(87) International publication number:
**WO 2018/207891 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2017  JP 2017094779**
        **11.05.2017  JP 2017094780**
        **03.08.2017  JP 2017150489**
        **03.08.2017  JP 2017150490**
        **07.03.2018  JP 2018040710**
        **07.03.2018  JP 2018040711**
        **14.03.2018  JP 2018046226**

(71) Applicant: **Toyo Seikan Group Holdings, Ltd.**
**Shinagawa-ku**
**Tokyo 141-8627 (JP)**

(72) Inventors:
• **KASHIWAKURA, Takuya**
  **Yokohama-shi**
  **Kanagawa 240-0062 (JP)**
• **SAKURAGI, Arata**
  **Yokohama-shi**
  **Kanagawa 240-0062 (JP)**
• **ZHANG, Nan**
  **Yokohama-shi**
  **Kanagawa 240-0062 (JP)**
• **YAMAMOTO, Hiromi**
  **Yokohama-shi**
  **Kanagawa 240-0062 (JP)**

(74) Representative: **J A Kemp LLP**
    **14 South Square**
    **Gray's Inn**
    **London WC1R 5JJ (GB)**

(54) **AQUEOUS COATING COMPOSITION AND METHOD FOR PRODUCING COATED METAL SUBSTRATE**

(57)     A polyester type aqueous coating composition that can be favorably used for metal cans such as beverage cans and can lids . The aqueous coating composition comprises a polyester resin having an acid value of not less than 5 mgKOH/g but less than 30 mgKOH/g and a curing agent having a functional group capable of reacting with a carboxyl group possessed by the polyester resin. The aqueous coating composition is capable of forming a coating that features excellent workability, curability and corrosion resistance.

EP 3 623 435 A1

## Description

Technical Field:

This invention relates to an aqueous coating composition used for metal cans. More specifically, the invention relates to an aqueous coating composition capable of forming a coating that excels in workability and features excellent curability and corrosion resistance, and to a method of producing a coated metal base material by using the aqueous coating composition.

Background Art:

A coating composition used for metal containers such as beverage cans and metal lids must have a workability capable of withstanding severe works (e.g., necking work, beading work, scoring work, riveting work) at the time of forming metal containers and metal lids. Depending upon the uses, furthermore, the coating composition must have various properties, such as favorable curability, corrosion resistance for preventing the metal base material from being corroded by the contents, property for preventing the flavor of the content from being lost, property for excellently maintaining sanitation without permitting the coating components to elute out, and excellent resistance against the retort treatment. In recent years, furthermore, attention must be given to the effects on the environmental pollution and working environments due to the volatilization of organic solvents during the works of coating and firing.

As the coating compositions used for metal containers and metal lids, so far, there have been widely used epoxy type coating materials such as epoxyphenol type coating material, epoxyamino type coating material and epoxyacrylic coating material. The epoxy type coating materials, however, are in many cases produced using the bisphenol A as the starting material. Therefore, it has been desired to provide a coating material that does not contain the bisphenol A.

From the above standpoint, therefore, as a coating composition for metal containers and metal lids, there has been proposed a polyester type aqueous coating composition without using the bisphenol A yet paying attention to the effects on environmental pollution and working environments.

As the polyester type aqueous coating composition, there has been proposed a coating material for metallic packages chiefly comprising a carboxyl group-containing aromatic polyester resin that has an acid value (AV) of 10 to 30 mgKOH/g and a number average molecular weight (Mn) of 3,000 to 10,000 in further combination with a curing agent, a neutralizing agent for the polyester resin and a cosolvent, the coating material featuring excellent curability and resistance against the retort-treatment (patent document 1).

As the aqueous coating composition, there has, further, been proposed an aqueous coating composition obtained by stably dispersing, in an aqueous medium, a $\beta$-hydroxyalkylamide crosslinking agent (D) and an acrylic modified polyester resin (C) that is obtained by graft-polymerizing a polyester resin (A) having an ethylenic double bond at the terminals of the resin and a number average molecular weight of 2,000 to 50,000 with a polymerizable unsaturated monomer component (B) that contains a carboxyl group-containing polymerizable unsaturated monomer (patent document 2).

Prior Art Documents:

Patent Documents:

Patent document 1: Japanese Patent No. 4228585
Patent document 2: Japanese Patent Laid-Open No. 2003-26992

Outline of the Invention:

Problems that the Invention is to Solve:

When use is made of, as the curing agent, a phenol resin that forms a self-condensed product as taught in the patent document 1, however, there are formed, in the coating, hard and brittle domains that are derived from the self-condensed product of the phenol resin. Therefore, the coating composition was not still fully satisfactory from the standpoint of workability of the coating. When there is used a polyester resin having a large acid value as taught in the patent document 2, on the other hand, the reaction points (crosslinking points) increase relative to the curing agent contributing to improving the curability. However, the crosslinking density becomes so high that the coating tends to be cracked during the forming and becomes no more capable of withstanding severe working, making it, therefore, difficult to attain the workability to a sufficient degree.

It is, therefore, an object of the present invention to provide an aqueous coating composition of the polyester resin type capable of forming a coating that excels in workability and features excellent coating performance such as curability and corrosion resistance.

Means for Solving the Problems:

According to the present invention, there is provided an aqueous coating composition comprising a polyester resin having an acid value of not less than 5 mgKOH/g but less than 30 mgKOH/g and a curing agent having a functional group capable of reacting with a carboxyl group possessed by the polyester resin.

In the aqueous coating composition of the present invention, it is desired that:

1. The functional group is at least the one selected from $\beta$-hydroxyalkylamide group, epoxy group and oxazoline group;
2. The curing agent is a $\beta$-hydroxyalkylamide compound;
3. The $\beta$-hydroxyalkylamide compound is an N,N,N',N'-tetrakis(2-hydroxyethyl) adipamide and/or an N,N,N',N'-tetrakis(2-hydroxypropyl) adipamide;
4. The curing agent has a functional group equivalent of 30 to 500 g/eq;
5. The curing agent has a molecular weight of not more than 1,000;
6. The amount of the solid component of the curing agent that is blended is 1 to 10 parts by mass per 100 parts by mass of the solid component of the polyester resin;
7. The polyester resin is a mixed polyester resin containing a polyester resin (A) and a polyester resin (B) having an acid value larger than that of the polyester resin (A), and a difference in the acid value between the polyester resin (A) and the polyester resin (B) is not less than 5 mgKOH/g;
8. The polyester resin (A) has an acid value of 3 to 20 mgKOH/g, the polyester resin (B) has an acid value of 10 to 60 mgKOH/g, and a solid component mass ratio of the polyester resin (A) and the polyester resin (B) is (A) : (B) = 95 : 5 to 5 : 95; and
9. The polyester resin is a mixed polyester resin containing a polyester resin ($\alpha$) having a glass transition temperature (Tg) of 35°C to 100°C and a polyester resin ($\beta$) having a Tg of -30°C to 25°C, and a mass ratio of the polyester resin ($\alpha$) and the polyester resin ($\beta$) is ($\alpha$): ($\beta$) = 98 : 2 to 10 : 90.

According to the present invention, further, there is provided a coated metal sheet having a coating of the aqueous coating composition formed one at least one surface thereof.

According to the present invention, there is, further, provided a coated metal container or a coated metal lid having a coating of the aqueous coating composition formed thereon.

Moreover, according to the present invention, there is provided a method of producing a coated metal base material, including steps of:

coating a metal base material with an aqueous coating composition that includes a chief agent of a polyester resin having an acid value of not less than 5 mgKOH/g but less than 30 mgKOH/g and a curing agent having a functional group capable of undergoing the crosslinking reaction with a carboxyl group possessed by the polyester resin; and firing the aqueous coating composition with which the metal base material is coated in the step of coating at a temperature which is higher than 200°C but is not higher than 320°C.

In the method of producing the coated metal base material of the present invention, it is desired that:

1. The curing agent is a $\beta$-hydroxyalkylamide compound; and
2. The metal base material is a metal sheet or a can.

Effects of the Invention:

The present inventors have keenly studied about improving the workability of the coating formed by using a polyester type aqueous coating composition, and have discovered that upon using a specific polyester resin and a curing agent, there can be formed a coating having excellent workability capable of withstanding even severe works. Besides, the coating formed by using the aqueous coating composition of the present invention has excellent curability and corrosion resistance, and can be favorably used for the metal containers such as beverage cans and for the metal lids.

Modes for Carrying Out the Invention:

(Polyester resins)

In the aqueous coating composition of the present invention, it is important that the polyester resin which is a chief agent has an acid value of not less than 5 mgKOH/g but is less than 30 mgKOH/g and, specifically, in a range of 10 to 29 mgKOH/g.

That is, in the present invention, it is important that the polyester resin which is the chief agent has a suitable amount of carboxyl groups (acid value) from the standpoint of realizing curability, workability and closely adhering property of the coating. When the acid value is smaller than the above range, there are only a small number of carboxyl groups that become crosslinking points to the curing agent. Therefore, the curability is not sufficient and the crosslinking is not sufficient, either. In such a case, it becomes difficult to improve the properties of the coating (heat resistance, workability, etc.) relying on the crosslinking with the curing agent. Moreover, since a decreased number of the carboxyl groups take part in the close adhesion between the coating and the metal base material, adhesion of the coating becomes poor. On the other hand, when the acid value is larger than the above range, the crosslinking points increase relative to the curing agent and excellent curability is exhibited. In this case, however, the crosslinking density becomes too high, and the workability becomes poor.

Even when the acid value is larger than the above range, the crosslinking density can be suppressed by adjusting the amount of the curing agent to be small. In this case, however, the free carboxyl groups that do not take part in the crosslinking remain in the coating deteriorating, therefore, the water-proof property of the coating. As a result, therefore, a sufficient degree of corrosion resistance is not obtained.

According to the present invention, it is also allowable to use a mixed polyester resin obtained by blending together two or more kinds of polyester resins having different acid values. In this case, a total value obtained by multiplying the acid values of the respective resins and the blending ratios (mass ratios) thereof is regarded to be the acid value ($Av_{mix}$) of the mixed polyester resins, and the acid value should lie in a range of not less than 5 mgKOH/g but less than 30 mgKOH/g (even if a polyester resin which by itself exhibits an acid value that lies outside the above range is used, it is allowable if an average acid value lies within the above range after blended with other polyester resins having different acid values).

As the polyester resin used as the chief agent, it is desired to use a mixed polyester resin of a mixture of a polyester resin (A) and a polyester resin (B) having an acid value larger than that of the polyester resin (A) and having a difference in the acid value of not less than 5 mgKOH/g from the polyester resin (A) from the standpoint of realizing both the workability and the curability of the coating on a higher level.

When there is used, as the chief agent, only the polyester resin (A) having a relatively small acid value, i.e., having a relatively small amount of carboxyl groups that become the reaction points relative to the curing agent ($\beta$-hydroxyalkylamide compound, etc.), the density of crosslinking points is suppressed and there can be easily formed a coating that features excellent workability requiring, however, an extended period of time for the crosslinking reaction due to a small number of the reaction points. Therefore, an extended period of firing time is required before the curing is attained to a high level or, in other words, curability tends to be deteriorated. On the other hand, when there is used, as the chief agent, only the polyester resin (B) having a relatively large acid value, i.e., having a relatively large amount of carboxyl groups, the curing can be attained to a sufficient degree within short periods of time or, in other words, excellent curability is realized resulting, however, in an increase in the density of the crosslinking points in the coating that is formed and the workability tends to be deteriorated.

Therefore, when there is used mixed polyester resin by mixing the polyester resin (A) and the polyester resin (B) together, the coating as a whole exhibits markedly improved curability as compared to when the polyester resin (A) only is used. Besides, as for the workability, properties of the polyester resin (A) are strongly reflected and excellent workability is realized. Therefore, both the curability and the workability can be realized on a higher level as compared to when a polyester resin is used in only a single kind.

Here, it is important that a difference in the acid value between the polyester resin (A) and the polyester resin (B) is, as described above, not less than 5 mgKOH/g, preferably, in a range of 5 to 55 mgKOH/g, more preferably, 7 to 40 mgKOH/g and, further preferably, 10 to 35 mgKOH/g from the standpoint of forming a coating having the above-mentioned properties. When the difference in the acid value is less than 5 mgKOH/g, it becomes difficult to attain the above-mentioned effects based on the use of the polyester resins having different acid values in combination.

In order for the above-mentioned effects to be efficiently exhibited, it is desired to use, as the polyester resin (A), a polyester resin having an acid value in a range of 3 to 20 mgKOH/g and, specifically, 5 to 15 mgKOH/g and, as the polyester resin (B), a polyester resin having an acid value in a range of 10 to 60 mgKOH/g and, specifically, 15 to 45 mgKOH/g under a condition that a difference in the acid value between the polyester resin (A) and the polyester resin (B) is not less than 5 mgKOH/g. Namely, it is desired to use the polyester resin (A) and the polyester resin (B) being mixed together at a ratio (mass ratio) in a range (A) : (B) of 95 : 5 to 5 : 95 and, specifically, 90 : 10 to 10 : 90.

Here, in the present invention, it is important that the mixed polyester resin obtained by mixing the above-mentioned polyester resins (A) and (B) together has an acid value ($Av_{mix}$) represented by the following formula (1),

$$Av_{mix} = [(Av_A \cdot W_A / (W_A + W_B) + (Av_B \cdot W_B / (W_A + W_B)] \; --- \; (1)$$

wherein, $Av_{mix}$ is an acid value (mgKOH/g) of the mixed polyester resin, $Av_A$ and $Av_B$ are acid values (mgKOH/g) of the polyester resins (A) and (B) that are used, and $W_A$ and $W_B$ are mass fractions of the polyester resins (A) and (B), that lies in a range of not less than 5 mgKOH/g but less than 30 mgKOH/g.

In the invention, the two polyester resins (A) and (B) having a difference in the acid value of not less than 5 mgKOH/g may be each a blend of a plurality of polyester resins. For instance, the polyester resin (A) may be a mixed polyester resin (A') which is a mixture of a plurality of kinds of polyester resins, and an acid value of the mixed polyester resin (A') as obtained in compliance with the above-mentioned formula (1) may be so set as to create a difference in the acid value of not less than 5 from the polyester resin (B).

When the mixed polyester resin (A') or similarly the mixed polyester resin (B') is to be used, the polyester resins that constitute the mixed polyester resin (A') should desirably be selected from the polyester resins (A) that have acid values in the range of 3 to 20 mgKOH/g as described above and, similarly, the polyester resins that constitute the mixed polyester resin (B') should desirably be selected from the polyester resins (B) that have acid values in the range of 10 to 60 mgKOH/g as described above.

As the polyester resins for use in the present invention, if the above-mentioned acid values are not taken into consideration, there can be used any known water-dispersible polyester resins and/or water-soluble polyester resins that have been used for the coating compositions.

The water-dispersible polyester resin and the water-soluble polyester resin are the polyester resins containing hydrophilic groups as components. These components may have been physically adsorbed by the surfaces of the polyester dispersion but, particularly preferably, have been copolymerized in the skeletons of the polyester resins.

As the hydrophilic groups, there can be exemplified hydroxyl group, amino group, carboxyl group, sulfonic acid group, derivatives thereof, metal salts and ether. Upon containing the hydrophilic groups in the molecules, the polyester resin is permitted to assume a state of being dispersed in water.

As the components containing the hydrophilic groups, there can be concretely exemplified carboxylic anhydrides such as phthalic anhydride, succinic anhydride, maleic anhydride, trimellitic anhydride, itaconic anhydride and citraconic anhydride; hydroxyl group-containing polyether monomers such as polyethylene glycol, polypropylene glycol, glycerin and polyglycerin; and metal salts of sulfonic acid-containing monomers such as 5-sulfoisophthalic acid, 4-sulfonaphthalene-2,7-dicarboxylic acid and 5(4-sulfophenoxy)isophthalic acid, as well as ammonium salts thereof.

There can be also used an acrylic resin-modified polyester resin obtained by graft-polymerizing a polyester resin with a vinyl type monomer having a hydrophilic group. As the vinyl type monomer having a hydrophilic group, there can be exemplified those monomers having a carboxyl group, a hydroxyl group, a sulfonic acid group or an amide group. As the group that can be turned into a hydrophilic group, there can be exemplified those groups having an acid anhydride group, a glycidyl group and a chloro group. However, the polyester resin modified with the acrylic resin is obtained through an increased number of the steps due to the modification often resulting, therefore, in an increase in the cost of production. The present invention, therefore, uses a polyester resin that has not been modified with an acrylic resin.

The present invention preferably uses, as the polyester resin, a water-dispersible carboxyl group-containing polyester resin having a carboxyl group as a hydrophilic group and/or a water-soluble carboxyl group-containing polyester resin.

There is no specific limitation on the monomer component that forms the polyester resin together with the monomer that contains the hydrophilic group provided the monomer component is the one that is usually used for polymerizing the polyester resin. As the polycarboxylic acid component that constitutes the polyester resin, there can be exemplified aromatic dicarboxylic acids such as terephthalic acid, isophthalic acid, orthophthalic acid and naphthalenedicarboxylic acid; aliphatic dicarboxylic acids such as succinic acid, glutalic acid, adipic acid, azelaic acid, sebacic acid, dodecanedioic acid and dimeric acid; unsaturated dicarboxylic acids such as (anhydrous) maleic acid, fumaric acid and terpene-maleic acid adduct; alicyclic dicarboxylic acids such as 1,4-cyclohexanedicarboxylic acid, tetrahydrophthalic acid, hexahydroisophthalic acid and 1,2-cyclohexenedicarboxylic acid; and trivalent or more highly valent carboxylic acids such as (anhydrous) trimellitic acid, (anhydrous) pyromellitic acid, and methylcyclohexene tricarboxylic acid, from which one or two or more kinds are selected and used. In the present invention, it is desired that the aromatic dicarboxlic acids such as terephthalic acid, isophthalic acid and naphthalenedicarboxylic acid are present at a ratio of not less than 60 mol% and, specifically, not less than 80% in the polycarboxylic acid components that constitute the polyester resin from the standpoint of corrosion resistance, resistance against the retort-treatment and flavor-retaining property.

There is no specific limitation on the polyhydric alcohol component that constitutes the polyester resin. Namely, as the polyhydric alcohol components, there can be exemplified aliphatic glycols such as ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methy-1,7-heptanediol, 4-methyl-1,8-octanediol, 4-propyl-1,8-octanediol and 1,9-nonanediol; ether glycols such as diethylene glycol, triethylene glycol, polyethylene glycol, polypropylene glycol and polytetramethylene glycol; alicyclic polyalcohols such as 1,4-cyclohexanedimethanol, 1,3-cyclohexanedimethanol, 1,2-cyclohexanedimethanol, tricyclodecane glycols, and hydrogenated biphenols; and trihydric or more highly hydric polyalcohols such as trimethylolpropane, trimethylolethane and pentaerythritol, from which one or two or more of them are used in combination. In the invention, among the above-mentioned polyhydric alcohol components, there can be favorably used the ethylene glycol, propylene glycol, 1,4-butanediol and 1,4-cyclohexanedimethanol as components for constituting the polyester resin from the sanitary point of view.

The water-dispersible carboxyl group-containing polyester resin and/or the water-soluble carboxyl group-containing polyester resin can be produced by a known method by, for example, polycondensing one or more of the above polycarboxylic acid components with one or more of the polyhydric alcohol components, depolymerizing the polyester resins with a polycarboxylic acid component such as terepthalic acid, isophthalic acid, anhydrous trimellitic acid, trimellitic acid or pyromellitic acid after the polyester resins have been polycondensed, or subjecting the polyester resins to the ring-opening addition reaction with an acid anhydride such as phthalic anhydride, maleic anhydride, trimellitic anhydride or ethylene glycol bistrimellitic dianhydride after the polyester resins have been polycondensed.

It is, further, desired that the polyester resins have glass transition temperatures (Tg) in a range of -30°C to 120°C and, specifically, 15°C to 100°C though not limited thereto only. When the Tg is higher than the above range, the coating that is formed becomes so hard that the workability may deteriorate. When the Tg is lower than the above range, on the other hand, the barrier property of the coating becomes so low that the corrosion resistance and the resistance against the retort treatment become poor.

In the present invention, it is desired to use two or more kinds of polyester resins having different Tgs, being blended together. Upon using the polyester resins having different Tgs, being blended together, there can be often formed a coating having more excellent shock resistance and developing less coating defect despite of receiving external shocks than when there is used only one kind of the polyester resin.

In such a case, too, the polyester resin blend should have a $Tg_{mix}$ calculated according to the following formula (2) that lies within the above-mentioned range of Tg,

$$1/Tg_{mix} = (W1/Tg1) + (W2/Tg2) + \cdots + (Wm/Tgm) --- (2)$$
$$W1 + W2 + \cdots + Wm = 1$$

wherein,

$Tg_{mix}$ is a glass transition temperature (K) of the polyester resin blend,
Tg1, Tg2, ···, Tgm are glass transition temperatures (K) of the polyester resins (polyester resin 1, polyester resin 2, ··· polyester resin m), and W1, W2, ···, Wm are weight fractions of the polyester resins (polyester resin 1, polyester resin 2, ··· polyester resin m).

In the aqueous coating composition of the present invention, it is specifically desired to use, as the polyester resin, a polyester resin ($\alpha$) having a Tg of 35°C to 100°C and a polyester resin ($\beta$) having a Tg of -30°C to 25°C being mixed together from the standpoint of shock resistance of the coating. The blending ratio in this case is a mass ratio of ($\alpha$) : ($\beta$) = 98 : 2 to 10 : 90 and, specifically, 95 : 5 to 30 : 70. It is, further, desired that the glass transition temperature ($Tg_{mix}$) as calculated according to the above formula (2) is not lower than 30°C from the standpoint of corrosion resistance and resistance against the retort treatment.

The polyester resin has a number average molecular weight (Mn) in a range of, desirably, 1,000 to 100,000 and, specifically, 3,000 to 50,000 though not limited thereto only. When it is smaller than the above range, the coating becomes brittle and often can be poorly worked. When it is larger than the above range, the coating may have a decreased stability.

The water-dispersible polyester resin and/or the water-soluble polyester resin should have average dispersion particle sizes in an aqueous medium desirably in a range of 10 to 1,000 nm and, specifically, 20 to 500 nm.

The polyester resin should have a hydroxyl value of not more than 20 mgKOH/g and, more preferably, not more than 10 mgKOH/g though not limited thereto only. When there is used a curing agent, e.g., a $\beta$-hydroxyalkylamide compound which reacts with the carboxyl groups of the polyester resin but is considered to react little, or not to react, with the hydroxyl groups, most of the hydroxyl groups of the polyester resin remain unreacted in the coating. Accordingly, when the hydroxyl value is larger than the above range, the hydroxyl groups remain much and may cause a decrease in the corrosion resistance.

(Curing agents)

In the present invention, an important feature resides in the use of a specific curing agent having a functional group capable of undergoing the crosslinking reaction with a carboxyl group possessed by the polyester resin that is the chief agent.

The functional group equivalent of the functional groups of the curing agent used in the present invention lies, preferably, in a range of 30 to 500 g/eq and, specifically, 40 to 200 g/eq. Here, the functional group equivalent referred to in the present invention is a value obtained by dividing the molecular weight by the number of the functional groups (the functional groups referred to here are the functional groups capable of undergoing the crosslinking reaction with the carboxyl groups of the polyester resin which is the chief agent) per a molecule of the curing agent. Namely, the functional group equivalent stands for a molecular weight per a functional group of the curing agent, and is expressed as, for example, epoxy equivalent. When the functional group equivalent is not smaller than the above range, it is not allowed to lengthen the distance between the crosslinking points. Therefore, the coating exhibits a decreased flexibility and may have a poor workability. When the functional group equivalent is larger than the above range, on the other hand, the curability may deteriorate.

It is, further, desired that the curing agent has an average molecular weight which is not more than 1,000. When it is larger than the above range, compatibility to the polyester resin which is the chief agent may decrease and the reactivity may often decrease. It is, further, desired that an average number of the functional groups is not less than 3 per a molecule of the curing agent from the standpoint of attaining a favorable curability.

As the curing agents, it is desired to use those that do not undergo the self-condensation reaction among themselves and, specifically, those that do not undergo the self-condensation reaction. Usually, the resol type phenol resins or the amino resins that are used as curing agents for the polyester type coating compositions, tend to easily undergo the self-condensation reaction among the curing agents, and form self-condensed products which are hard and brittle domains at the time of forming the coating. Therefore, the coating often becomes hard and less workable. Besides, since the reaction points (functional groups) of the curing agent are dissipated in the self-condensation reaction, the curing agent must be used in an increased amount, as a matter of course, to obtain a sufficient degree of curability, accounting for a decreased inefficiency. Besides, presence of the curing agent in large amounts in the coating may adversely affect the properties of the coating, such as workability and corrosion resistance. On the other hand, when there is used the curing agent that little undergoes the self-condensation reaction or that does not undergo the self-condensation reaction, it is made possible to suppress the formation of the hard and brittle self-condensed products . Besides, the curing agent needs be added in a minimum required amount to meet the amount of the carboxyl groups of the polyester resin, which makes the process efficient. Moreover, the amount of the curing agent can be decreased in the coating and, as a result, there can be formed a coating having excellent workability and corrosion resistance. As the curing agent having a functional group capable of reacting with the carboxyl group of the polyester resin, therefore, it is desired to use a curing agent having a functional group that little induces the self-condensation reaction among the curing agent. As such a functional group, there can be exemplified epoxy group, carbodiimide group, oxazoline group, amino group, hydroxyl group (but excluding hydroxyl group derived from the self-condensed methylol group contained in the resol type phenol resin or amino resin, and hydroxyl group derived from the self-condensed silanol group contained in the silane coupling agent), and $\beta$-hydroxyalkylamide group. Among them, it is desired to use curing agents having epoxy group, oxazoline group and $\beta$-hydroxyalkylamide group and, specifically, a curing agent having the $\beta$-hydroxy-alkylamide group.

(Curing agents containing the $\beta$-hydroxyalkylamide group)

As the curing agent having the $\beta$-hydroxyalkylamide group, there can be exemplified $\beta$-hydroxyalkylamide compounds represented, for example, by the following general formula [I],

General formula [I];     $[HO\text{-}CH(R_1)\text{-}CH_2\text{-}N(R_2)\text{-}CO\text{-}]_m \text{-}A\text{-}[\text{-}CO\text{-}N(R_2')\text{-}CH_2\text{-}CH(R_1')\text{-}OH]_n$

wherein, $R_1$ and $R_1'$ are hydrogen atoms or alkyl groups having 1 to 5 carbon atoms, $R_2$ and $R_2'$ are hydrogen atoms, alkyl groups having 1 to 5 carbon atoms or those represented by the general formula [II], A is a polyvalent organic group, m is 1 or 2, and n is 0 to 2 (the sum of m and n being at least 2).

General formula [II];     $HO\text{-}CH(R_3)\text{-}CH_2\text{-}$

wherein, $R_3$ is a hydrogen atom or an alkyl group having 1 to 5 carbon atoms.

In the above general formula [I], A is desirably an aliphatic, an alicyclic or an aromatic hydrocarbon and is, more preferably, an aliphatic, an alicyclic or an aromatic hydrocarbon having 2 to 20 carbon atoms, and is, further preferably, an aliphatic hydrocarbon having 4 to 10 carbon atoms.

In the above general formula [I], further, the sum of m and n is, desirably, 2, 3 or 4.

Among those represented by the above general formula [I], the $\beta$-hydroxyalkylamide group-containing curing agent ($\beta$-hydroxyalkylamide compound) used as the curing agent is, specifically, an N,N,N',N'-tetrakis(2-hydroxyethyl) adipamide [CAS: 6334-25-4, molecular weight: about 320, functional group equivalent: about 80 g/eq, number of functional groups per a molecule: 4, product: Primid XL 552 produced by EMS-GRILTECH Co.] or an N,N,N',N'-tetrakis(2-hydroxypropyl) adipamide [CAS: 57843-53-5, molecular weight: about 376, functional group equivalent: about 95 g/eq, number of functional groups per a molecule: 4, product: Primid QM 1260 produced by EMS-GRILTECH Co.]. Of them, it is more desired to use the N,N,N',N'-tetrakis (2-hydroxypropyl) adipamide from the standpoint of curability and resistance against the retort treatment. As compared to the N,N,N',N'- tetrakis(2-hydroxyethyl) adipamide, the N,N,N',N'-tetrakis (2-hydroxypropyl) adipamide is highly reactive with the polyester resin, can be excellently cured, forms a densely crosslinked structure, permits the coating to be little whitened during the retort treatment and hence helps form the coating having excellent resistance against the retort treatment.

(Epoxy group-containing curing agents)

As the curing agent having the epoxy group, there can be exemplified polyepoxy compounds that dissolve in water, such as polyethylene glycol diglycidyl ether, sorbitol tetraglycidyl ether, trimethylolpropane diglycidyl ether, trimethylolpropane triglycidyl ether and polyglycerol polyglycidyl ether. Concrete examples include DENACOLs EX-314 [molecular weight: about 320, functional group (epoxy) equivalent: about 144 g/eq], EX-421 [molecular weight: about 440, functional group (epoxy) equivalent: about 159 g/eq] and EX-611 [molecular weight: about 630, functional group (epoxy) equivalent: about 167 g/eq] that are produced by Nagase Chem-Tecks Co.

(Oxazoline group-containing curing agents)

As the curing agent containing the oxazoline group, there can be exemplified a water-soluble polymer obtained by polymerizing a monomer composition that contains an oxazoline derivative. As the oxazoline derivative, there can be exemplified 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline and 2-isopropenyl-5-ethyl-2-oxazoline. As the monomer other than the oxazoline derivative contained in the monomer composition that contains the oxazoline derivative, there can be used any compound without any limitation provided it is capable of copolymerizing with the oxazoline derivative and is inert to the oxazoline group. It is desired that the structural units derived from the oxazoline derivative is present in the oxazoline group-containing polymer at a ratio of not less than 5% by mass. Concretely, there can be exemplified EPOCROS WS-300 [number average molecular weight: about 40,000, functional group (oxazoline) equivalent: about 130 g/eq] and EPOCROS WS-700 [number average molecular weight: about 20,000, functional group (oxazoline) equivalent: about 220 g/eq] produced by Nihon Shokubai Co.

The curing agent is used in an amount of, preferably, 1 to 10 parts by mass, more preferably, 2 to 8 parts by mass, and further preferably, 3 to 7 parts by mass per 100 parts by mass of the polyester resin (solid component). When the amount of the curing agent is smaller than the above range, the curability is not realized to a sufficient degree. When the amount of the curing agent is larger than the above range, on the other hand, it becomes disadvantageous in economy. More than that, in case the amount of the functional groups of the curing agent becomes very greater than the amount of the carboxyl groups of the polyester resin, then it becomes difficult for a molecule of the curing agent to react with two or more molecules of the polyester resin. As a result, in this case, the crosslinking is formed rather poorly, and the curability often decreases. Moreover, stability may decrease during the storage over extended periods of time.

The amount of the functional groups ($\beta$-hydroxyalkylamide groups) of the curing agent relative to the amount of the carboxyl groups of the polyester resin is in a range of 0.2 to 3.0 equivalents and, more preferably, 0.5 to 2.5 equivalents.

(Aqueous media)

The aqueous coating composition of the present invention contains the above-mentioned polyester resin, curing agent and aqueous medium. As the aqueous medium, there can be used water or a mixture of water and an organic solvent such as alcohol, polyhydric alcohol or a derivative thereof like in the case of the conventional aqueous coating compositions. When the organic solvent is used, it is desired that its amount is 1 to 45% by mass and, specifically, 5 to 30% by mass per the whole aqueous medium in the aqueous coating composition. The solvent contained in an amount in the above-mentioned range helps improve the formation of the coating.

As the organic solvent, it is desired to use those having amphipathic property, such as methyl alcohol, ethyl alcohol, isopropyl alcohol, n-butanol, ethylene glycol, methyl ethyl ketone, butyl cellosolve, carbitol, butylcarbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl-3-methoxybutanol.

(Basic compounds)

It is desired that the aqueous coating composition of the present invention contains a basic compound that is capable of neutralizing the carboxyl groups of the polyester resin in order to render the polyester resin dispersible in water or soluble in water. As the basic compound, it is desired to use a compound that volatilizes through the firing at the time of forming the coating, i.e., to use ammonia and/or an organic amine compound having a boiling point of not higher than 250°C.

Concretely, there can be used alkylamines such as trimethylamine, triethylamine and n-butylamine; and alcohol amines such as 2-dimethylaminoethanol, diethanolamine, triethanolamine, aminomethylpropanol, and dimethylaminomethylpropanol. It is also allowable to use polyvalent amines such as ethylenediamine and diethylenetriamine. There can be, further, preferably used an amine having a branched chain alkyl group and a heterocyclic amine. As the amine having a branched chain alkyl group, there can be used a branched chain alkylamine having 3 to 6 carbon atoms and, specifically, 3 to 4 carbon atoms, such as isopropylamine, sec-butylamine, tert-butylamine and isoamylamine. As the heterocyclic amine, there can be used a saturated heterocyclic amine having a nitrogen atom, such as pyrrolidine, piperidine and morpholine.

Among them, the invention preferably uses the trimethylamine or the 2-dimethylaminoethanol in an amount of 0.5 to 1.5 equivalents with respect to the carboxyl groups.

(Curing catalysts)

The aqueous coating composition of the present invention may, as required, be blended with a known curing catalyst in order to accelerate the crosslinking reaction between the polyester resin and the curing agent.

As the curing catalyst, there can be used a known curing catalyst, i.e., an acid catalyst such as p-toluenesulfonic acid, dodecylbenzenesulfonic acid, dinonylnaphthalenedisulfonic acid or amine-blocked compound thereof; an organic metal compound such as organotin compound, organotitanium compound, organozinc compound, organocobalt compound or organoaluminum compound; a metal oxide such as zinc oxide, titanium oxide or aluminum oxide; or a phosphorus type compound such as hypophosphite of an alkali metal, phosphite of an alkali metal, hypophosphorous acid or alkyl phosphinic acid.

The curing catalyst is used in an amount in a range of 0.1 to 5 parts by mass per 100 parts by mass of the solid component of the polyester resin. When the amount of the curing catalyst is smaller than the above range, the effect for accelerating the curing reaction cannot be exhibited to a sufficient degree despite of using the curing catalyst. Even when the amount of the curing catalyst is larger than the above range, on the other hand, no further effect can be expected but only accompanied by disadvantage in economy.

(Additives)

According to the present invention, the aqueous coating composition contains, as required, a tannic acid as an additive. When the tannic acid is added, a chelate is formed by the tannic acid and the metal base material that is to be coated often improving close adhesion in the interface between the metal base material and the coating. Therefore, there can be expected an improved adhesiveness in the interface between the metal base material and the coating in, specifically, a high temperature · highly humid environment such as of sterilization treatment. The tannic acid is added in an amount of, preferably, 0.01 to 10 parts by mass and, specifically, 0.1 to 5 parts by mass per 100 parts by mass of the polyester resin.

(Lubricating agent)

According to the present invention, the aqueous coating composition contains, as required, a lubricating agent. The lubricating agent is added in an amount of, preferably, 0.1 parts by mass to 10 parts by mass per 100 parts by mass of the polyester resin.

Use of the lubricating agent helps suppress the coating from being scratched at the time when the cans and lids are being formed and, further, helps improve slipperiness of the coating at the time when it is being formed.

As the lubricating agent that can be added to the aqueous coating composition of the present invention, there can be exemplified fatty acid ester wax which is an esterified product of a polyol compound and a fatty acid, silicon type wax, fluorine type wax, polyolefin wax like polyethylene, lanolin type wax, montane wax, microcrystalline wax, carnauba wax and silicon type compound. These lubricating agents can be used in a single kind or in a mixture of two or more kinds.

(Others)

The aqueous coating composition of the present invention may, further, contain, in addition to the above-mentioned components, the components that have heretofore been used for the coating compositions, such as leveling agent, pigment and defoaming agent according to known recipes.

Moreover, the aqueous coating composition of the invention may, further, contain, in addition to the polyester resins, other resin components which are dispersible or soluble in water, such as polyvinyl acetate, ethylene·vinyl acetate copolymer, polyolefin type resin, epoxy resin, polyurethane resin, acrylic resin, phenol resin, melamine resin, polyvinyl chloride type resin, polyvinyl chloride-vinyl acetate copolymer resin, polyvinyl alcohol, ethylene·vinyl alcohol copolymer, polyvinyl pyrrolidone, polyvinylethyl ether, polyacrylamide, acrylamide type compound, polyethyleneimine, starch, gum Arabic and methyl cellulose in ranges in which they do not impair the object of the present invention.

In the aqueous coating composition of the present invention, it is desired that the polyester resin is contained in an amount of 5 to 55% by mass as a solid component. When the solid component of the resin is smaller than the above range, the coating cannot be secured in a proper amount and coating performance becomes poor. When the solid component of the resin is larger than the above range, on the other hand, the workability and coating property may often become poor.

The aqueous coating composition of the present invention can be applied onto a metal sheet relying on a known coating method such as coating by using a roll coater, spray coating or dip coating, and is fired by such a heating means as coil oven. The conditions for firing the aqueous coating composition of the present invention may differ depending on the polyester resin, curing agent, kind of the metal base material and the amount of application. The aqueous coating composition, however, can be heated and cured under the conditions of, for example, a firing temperature of 150°C to 320°C and a firing time of 5 seconds to 30 minutes, which can be suitably adjusted.

(Method of producing the coated metal base material)

The method of producing the coated metal base material of the present invention comprises the steps of coating a metal base material with the above-mentioned aqueous coating composition of the present invention, and firing the aqueous coating composition applied onto the metal base material in the step of coating at a temperature which is higher than 200°C but is not higher than 320°C.

[Step of coating]

In the step of coating, the metal base material is coated with the above-mentioned aqueous coating composition by a known coating method such as coating by using a roll coater or a spray coating.

It is, here, desired that the aqueous coating composition is so applied that the coating after dried has a thickness of less than 20 $\mu$m and, specifically, has a thickness of 0.5 to 15 $\mu$m.

[Step of firing]

In the step of firing, it is desired that the aqueous coating composition applied onto the metal base material is heated at a temperature of higher than 200°C but not higher than 320°C. The temperature referred to here stands for a temperature of the atmosphere (temperature in the furnace of an oven) during the firing.

Upon executing the heating at a temperature in the above-mentioned range, it becomes possible to attain the curing to a sufficient degree within short periods of time even by using an aqueous coating composition which comprises a polyester resin having an acid value which is as relatively low as not less than 5 mgKOH but less than 30 mgKOH/g and a specific curing agent. When the firing temperature is lower than the above range, the curing may not often be attained to a sufficient degree if the firing time is short. When the firing temperature is higher than the above range, on the other hand, the polyester resin may often be thermally decomposed due to excessive heating. The firing time should be not shorter than 5 seconds, preferably 5 to 180 seconds and, specifically, 10 to 120 seconds. When the firing time is shorter than the above range, the curing may not be executed to a sufficient degree. When the firing time is longer than the above range, on the other hand, there occurs disadvantage in economy and productivity.

The firing method can be carried out relying upon the conventional heating means depending on the shape of the metal base material, etc.

(Coated metal base materials)

According to the present invention, it is allowed to produce coated metal base materials such as coated metal sheet, coated metal container and coated metal lid by forming a coating on the metal base material relying on the above-mentioned method of production. As the metal base material on which the coating is to be formed, there can be exemplified a metal sheet, a metal container (metal can) and a metal lid.

[Coated metal sheets]

The aqueous coating composition of the present invention is applied onto the metal sheet by a known coating method, such as coating by using a roll coater and spray coating. The aqueous coating composition is then fired by a heating means such as an oven to thereby obtain a coated metal sheet.
As the metal sheet, though not limited thereto only, there can be exemplified hot-rolled steel sheet, cold-rolled steel sheet, steel sheet plated with molten zinc, steel sheet electrically plated with zinc, steel sheet plated with an alloy, steel sheet plated with an aluminum-zinc alloy, aluminum sheet, tin-plated steel sheet, stainless steel sheet, copper sheet, steel sheet plated with copper, tin-free steel sheet, nickel-plated steel sheet, very thin tin-plated steel sheet and chromium-treated steel sheet. As required, these steel sheets may be treated for their surfaces with, for example, phosphoric chromate or may be conversion-treated with zirconium.
On the coating of the above coated metal sheet, there can be, further, laminated a thermoplastic resin film such as polyester resin film as an organic resin coating to obtain a coated metal sheet which is, further, coated with an organic resin.

[Coated metal containers]

A coated metal container can be obtained by forming a coating of the aqueous coating composition of the invention on the inner surface and/or the outer surface of the metal container. The aqueous coating composition of the present invention excels, specifically, in workability and corrosion resistance. It is, therefore, desired that the coating of the coating composition of the invention is formed on at least the inner surface of the metal container.
As the metal container on which the coating is to be formed, there can be exemplified all conventional metal containers, such as three-piece cans having a seem on the side surfaces thereof and seamless cans (two-piece cans).
The coated metal containers can be also obtained by using the above-mentioned coated metal sheet. In the case of the metal containers that are to be formed through a severe working, such as seamless cans, the metal containers that have been formed in advance may be spray-coated with the aqueous coating composition of the present invention. The metal containers such as seamless cans can also be formed from a coated metal sheet which is further coated with an organic resin, i.e., from the above-mentioned coated metal sheet which has, further, been coated with an organic resin.

[Coated metal lids]

From the above coated metal sheet coated with the aqueous coating composition of the present invention, there can be obtained a coated metal lid relying on a conventional method of producing lids. The coated metal lid can be used, for example, as an easy-open can lid of the stay-on-tab type and the easy-open can lid of the full-open type.

EXAMPLES

The invention will now be concretely described below by way of Examples in which parts are all by mass.
The polyester resins were measured for their properties according to the methods described below.
Measurements were taken by using the carboxyl group-containing polyester resins of a solid form obtained by removing, using an evaporator, the aqueous medium from the aqueous dispersions of the carboxyl group-containing polyester resins, followed by vacuum drying.

(Measuring the number average molecular weights)

Measured relying upon the gel permeation chromatography (GPC) using a calibration curve of a standard polyethylene.

(Measuring the glass transition temperatures)

Measured by using a differential scanning calorimeter (DSC) at a rate of a temperature rise of 20°C/min.

(Measuring the acid values)

0.2 Grams of a polyester resin was dissolved in 20 ml of chloroform and was titrated with a 0.1N KOH ethanol solution to find an acid value of the resin (mgKOH/g). A phenolphthalein was used as the indicator. When the polyester resin did not dissolve, a tetrahydrofuran was used as the solvent.

(Measuring the monomer composition)

As for a monomer composition of the polyester resin, 30 mg of the resin dried in vacuum was dissolved in 0.6 ml of the heavy chloroform, and a composition ratio was found from the peak intensities as measured by the $^1$H-NMR. The composition ratio was determined by excluding trace amounts of the components (those components less than one mol% per the whole monomer components).

(Forming the coated metal sheets)

By using a bar coater, the metal sheets were coated with the aqueous coating compositions of the Examples, Comparative Examples and Reference Examples in a manner that the coatings possessed a predetermined thickness after the firing. The coatings were fired in an oven at a predetermined temperature for a predetermined period of time to obtain the coated metal sheets. The coating conditions were as shown in Tables 1 to 3. In Example 1, the firing temperature (in the oven) was set to be 260°C, the firing time was 60 seconds, and the thickness of the coating after fired was 1.5 $\mu$m. The coated metal sheets that were obtained were evaluated for various properties based on the below-mentioned methods of evaluation.

As for the metal sheets, an aluminum sheet treated for its surface with the chromic phosphate (alloy 3104, sheet thickness: 0.28 mm, weight of chromium in the surface-treating coating: 20 mg/m$^2$) was used in Examples 1 to 24, Comparative Examples 1 to 3 and Reference Examples 1 to 3, while an aluminum sheet treated for its surface with the chromic phosphate (alloy 3004, sheet thickness: 0.30 mm, weight of chromium in the surface-treating coating: 20 mg/m$^2$) was used in Examples 25 to 43 and Reference Examples 4 to 11.

(Curability)

The curability of the coated metal sheet was evaluated in terms of the extractability with MEK. A test piece of a size of 5 cm x 5 cm was cut out from the coated metal sheet. The test piece was measured for its mass (W1), and was then extracted with 200 ml of an MEK (methyl ethyl ketone) at room temperature for one hour. The test piece after extracted was dried under a condition of 130°C for one hour, and was measured for its mass (W2). Further, the coating was removed by a decomposition method using the concentrated sulfuric acid, and the test piece was measured for its mass (W3). The extractabilities of the coated metal sheets with the MEK could be found according to the following formula (3). The results were as shown in Tables 1 and 3.

```
Extractability with MEK % = 100 x (W1 - W2)/(W1 - W3)
                                                    --- (3)
```

Evaluations in Table 1 (Examples 1 to 22, Comparative Examples 1 to 3, and Reference Examples 1 to 3) were on the following basis.
◎: Less than 10%.
○: Not less than 10% but less than 30%.
△: Not less than 30% but less than 50%.
×: Not less than 50%.
Evaluations in Table 3 (Examples 25 to 43, and Reference Examples 4 to 11) were on the following basis.

A: Less than 10%.
B: Not less than 10% but less than 25%.
C: Not less than 25% but less than 40%.
D: Not less than 40%.

(Workability)

The coated metal sheet was cut into a size of 3.5 x 4 cm in a manner that the aluminum sheet had the long side in the direction in which it was rolled. The thus obtained test piece was folded in parallel with the short side thereof in a manner that the coated surface faced outward. As spacers, aluminum sheets of a thickness equal to that of the coated metal sheet were placed in a predetermined number (two pieces of aluminum sheet of a thickness of 0.28 mm in Examples 1 to 22, Comparative Examples 1 to 3 and Reference Examples 1 to 3, and a piece of aluminum sheet of a thickness of 0.30 mm in Examples 25 to 43 and Reference Examples 4 to 11) on the inside of the folded portion in an atmosphere of 25°C. By using a haze folded type du Pont impact tester, the test piece was folded by applying an impact. The iron weight for impact folding possessed a flat contact surface, weighed 3 kg, and was allowed to fall from a height of 40 cm. The folded end portion was brought over a width of 2 cm into contact with a sponge dipped in a 1% sodium chloride aqueous solution. A voltage of 6.3 V was applied to the end portion, and a current value (mA) was measured after 4 seconds have passed. The results were as shown in Tables 1 and 3.

Evaluations in Table 1 (Examples 1 to 22, Comparative Examples 1 to 3, and Reference Examples 1 to 3) were on the following basis.

◎: Less than 5 mA.

○: Not less than 5 mA but less than 20 mA.

△: Not less than 20 mA but less than 30 mA.

✕: Not less than 30 mA.

Evaluations in Table 3 (Examples 25 to 43, and Reference Examples 4 to 11) were on the following basis.

A: Less than 2 mA.

B: Not less than 2 mA but less than 3 mA.

C: Not less than 3 mA but less than 5 mA.

D: Not less than 5 mA.

(Corrosion resistance)

A test piece of a size of 5 cm x 5 cm was cut out from the coated metal sheet. By using the du Pont impact tester, an impact punch having a tip of a diameter of one-fourth inch weighing 120 g, was allowed to fall from a height of 30 cm on the test piece so that the coated surface thereof was deformed as to protrude. The deformed test piece was then dipped in a model solution that was prepared simulating the content in the can, and the degree of corrosion was evaluated with the eye on the following basis. The dipping conditions consisted of 37°C and 14 days. The model solution used for the test was the one that contained 0.2% of table salt and to which the citric acid was so added that the pH thereof was 2.5. The results were as shown in Table 1. The evaluations were on the following basis.

◎: No corrosion.

○: Corroded a little.

△: Partly corroded.

✕: Mostly corroded.

(Resistance against the retort treatment)

The coated metal sheet was put into an autoclave, retort-treated at 125°C for 30 minutes, and was evaluated for the whitened state (whitening) of the coating with the eye. The results were as shown in Table 2. The evaluations were on the following basis.

◎: No whitening.

○: Slightly whitened.

△: Whitened a little.

✕: Whitened to a conspicuous degree.

[Preparation of aqueous coating compositions]

(Example 1)

A polyester resin a (acid value: 23 mgKOH/g, Tg: 80°C, Mn = 7,500, monomer composition: terephthalic acid component/ethylene glycol component/propylene glycol component = 50/10/40 mol%) was used as the polyester resin which was the chief agent, and an N,N,N',N'-tetrakis (2-hydroxyethyl) adipamide [produced by Tokyo Kasei Kogyo Co.; described as "$\beta$-hydroxyalkylamide A" in Table] was used as the curing agent or as the $\beta$-hydroxyalkylamide group-containing curing agent ($\beta$-hydroxyalkylamide compound). 333 Parts of an aqueous dispersion solution of the polyester resin a (solid component concentration: 30 wt%) (100 parts of the solid component), 50 parts of an aqueous solution of the $\beta$-hydroxyalkylamide group-containing curing agent prepared in advance by using ion-exchanged water (solid component concentration: 10 wt%) (5 parts of the solid component), 150 parts of a 2-propanol, and 517 parts of ion-exchanged water, were introduced into a glass container, and were stirred therein for 10 minutes to obtain an aqueous coating composition having a solid component concentration of 10% by mass and a solid component blending ratio of polyester resin/curing agent = 100/5 (mass ratio).

(Examples 2 to 6)

Aqueous coating compositions were obtained in the same manner as in Example 1 but changing, as shown in Table 1, the polyester resin into a polyester resin b (Tg: 67°C, Mn = 9,000, acid value: 18 mgKOH/g, monomer composition: terephthalic acid component/isophthalic acid component/ethylene glycol component/neopentyl glycol component = 36/14/24/26 mol%), into a polyester resin c (Tg: 40°C, Mn=8,500, acid value: 17 mgKOH/g, monomer composition: terephthalic acid component/isophthalic acid component/adipic acid/ethylene glycol component/neopentyl glycol component = 28/15/7/25/25 mol%), into a polyester resin d (Tg: 20°C, Mn = 17,000, acid value: 11 mgKOH/g, monomer composition: terephthalic acid component/isophthalic acid component/sebacic acid component/ethylene glycol component/neopentyl glycol component = 31/7/12/30/20 mol%), into a polyester resin g (Tg: 40°C, Mn = 5,000, acid value: 29 mgKOH/g), and into a polyester resin h (Tg: 52°C, Mn = 17,000, acid value: 5 mgKOH/g, monomer composition: terephthalic acid component/isophthalic acid component/adipic acid component/ethylene glycol component/neopentyl glycol component = 23/23/4/24/26 mol%).

(Example 7)

A coating composition was prepared in the same manner as in Example 1 but using, as the polyester resin, a mixture of the polyester resin a and the polyester resin d at a mass ratio of 60:40 (Tg$_{mix}$: 53°C).

(Example 8)

A coating composition was prepared in the same manner as in Example 1 but using, as the polyester resin, a mixture of the polyester resin a and a polyester resin f (Tg: -25°C, Mn = 17,000, acid value: 12 mgKOH/g, monomer composition: terephthalic acid component/isophthalic acid component/sebacic acid component/1,4-butanediol component = 14/17/19/50 mol%) at a mass ratio of 70:30 (Tg$_{mix}$: 40°C).

(Example 9)

A coating composition was prepared in the same manner as in Example 1 but using, as the polyester resin, a mixture of the polyester b and a polyester e (Tg: 8°C, Mn = 19,000, acid value: 12 mgKOH/g, monomer composition: terephthalic acid component/isophthalic acid component/sebacic acid component/ethylene glycol component/neopentyl glycol component = 30/5/15/22/28 mol%) at a mass ratio of 50:50 (Tg$_{mix}$: 33°C) .

(Examples 10 to 14)

Aqueous coating compositions were prepared in the same manner as in Example 1 but using the components at solid component blending ratios as shown in Table 1.

(Example 15)

An aqueous coating composition was prepared in the same manner as in Example 1 but using, as the $\beta$-hydroxyalkylamide group-containing curing agent, an N,N,N',N'-tetrakis (2-hydroxypropyl) adipamide [Primid QM1260 produced by EMS-GRILTECH Co.; described in Table as "$\beta$-hydroxyalkylamide B"]

(Examples 16 to 22)

Aqueous coating compositions were prepared in the same manner as in Example 1 but blending the components as shown in Table 1.

(Comparative Examples 1 to 3)

Aqueous coating compositions were prepared in the same manner as in Example 1 but changing the kinds of the polyester resins as shown in Table 1.

(Reference Example 1)

An aqueous coating composition was prepared in the same manner as in Example 1 but blending the components as shown in Table 1.

(Reference Example 2)

A polyester resin a was used as the polyester resin and a resol type phenol resin was used as the curing agent. As the resol type phenol resin, use was made of a metacresol type phenol resin with its methylol groups being etherified with butyl (ratio of the etherified methylol groups: 90 mol%, Mn = 1,600). An aqueous coating composition (solid component concentration: 10 mass%, solid component blending ratio: polyester resin/curing agent = 100/15) was prepared by using 333 parts of an aqueous dispersion solution of the polyester resin a (100 parts of the solid component), 40 parts of the n-butanol solution of the resol type phenol resin (20 parts of the solid component), one part of a dodecylbenzenesulfonic acid (curing catalyst), 0.3 parts of a trimethylamine, 200 parts of a 2-propanol and 635 parts of ion-exchanged water. As the dodecylbenzenesulfonic acid, use was made of the "dodecylbenzenesulfonic acid (soft type) (mixture)" produced by Tokyo Kasei Kogyo Co.

(Reference Example 3)

An aqueous coating composition was prepared in the same manner as in Reference Example 2 but adjusting the amount of the n-butanol solution that is the curing agent and the amount of the ion-exchanged water so that the solid component blending ratio was polyester resin/curing agent = 100/5 (mass ratio) in the aqueous coating composition.

(Example 23)

An aqueous coating composition was prepared in the same manner as in Example 1 but using, as the polyester resin, a mixture of the polyester resin a and the polyester resin f at a mass ratio of 80:20 ($Tg_{mix}$: 52°C).

(Example 24)

An aqueous coating composition was prepared in the same manner as in Example 23 but using, as the $\beta$-hydroxyalkylamide group-containing curing agent, an N,N,N',N'-tetrakis (2-hydroxypropyl) adipamide [Primid QM1260 produced by EMS-GRILTECH Co.; described in Table as "$\beta$-hydroxyalkylamide B"]

(Example 25)

A polyester resin (A)-a (acid value: 5 mgKOH/g, Tg: 52°C, Mn = 17,000, monomer composition: terephthalic acid component/isophthalic acid component/adipic acid component/ethylene glycol component/neopentyl glycol component = 23/23/4/24/26 mol%) was used as the polyester resin (A), a polyester resin (B)-a (acid value: 23 mgKOH/g, Tg: 80°C, Mn = 7,500, monomer composition: terephthalic acid component/ethylene glycol component/propylene glycol component = 50/10/40 mol%) was used as the polyester resin (B), and an N,N,N',N'-tetrakis(2-hydroxypropyl)adipamide [produced by Tokyo Kasei Kogyo Co.; described as "$\beta$-hydroxyalkylamide A" in Table] was used as the $\beta$-hydroxyalkylamide compound which was the curing agent. 333 Parts of an aqueous dispersion solution (solid component concentration: 30 wt%) (100 parts of the solid component) of a mixed polyester resin ($Av_{mix}$: 14.0 mgKOH/g, $Tg_{mix}$: 65.4°C) obtained by so mixing the aqueous dispersion solution of the polyester resin (A) and the aqueous dispersion solution of the polyester resin (B) that the solid component mass ratio thereof was 50:50, 50 parts of an aqueous solution of the $\beta$-hydroxyalkylamide compound (solid component concentration: 10 wt%) (5 parts of solid component) prepared in advance by using ion-exchanged water, 150 parts of a 2-propanol, and 517 parts of ion-exchanged water, were introduced into a glass container, and were stirred therein for 10 minutes to obtain an aqueous coating composition having a solid component concentration of 10% by mass and a solid component blending ratio of polyester resin/curing agent = 100/5 (mass ratio).

(Examples 26 to 43, Reference Examples 4 to 9)

Aqueous coating compositions were prepared in the same manner as in Example 25 but changing the kinds of the polyester resins, kinds of the curing agents and the ratio of blending the solid components as shown in Table 3. Here, as the curing agent, use was made of the N,N,N',N'-tetrakis (2-hydroxypropyl) adipamide [Primid QM1260 produced by EMS-GRILTECH Co.; described in Table as "$\beta$-hydroxyalkylamide B"].

In Example 43, the tannic acid was added as the additive. As the tannic acid, use was made of the "Tannic Acid" produced by Sigma Aldrich Co. The tannic acid was added in a manner of, first, preparing an aqueous solution of tannic acid (solid component concentration: 1 wt%) by using ion-exchanged water, and mixing the thus obtained aqueous solution into the aqueous coating material with stirring.

(Reference Example 10)

A polyester resin (A)-d (acid value: 11 mgKOH/g, Tg: -25°C, Mn = 17,000, monomer composition: terephthalic acid component/isophthalic acid component/sebacic acid component/1,4-butanediol component = 14/17/19/50 mol%) was used as the polyester resin (A), the polyester resin (B)-a was used as the polyester resin (B), and a resol type phenol resin was used as the curing agent. As the resol type phenol resin, use was made of a metacresol type phenol resin with its methylol groups being etherified with butyl (ratio of the etherified methylol groups: 90 mol%, Mn = 1,600). An aqueous coating composition (solid component concentration: about 10% by mass, solid component blending ratio: polyester resin/curing agent = 100/15) was prepared by using 333 parts of an aqueous dispersion solution (solid component concentration: 30 wt%) (100 parts of the solid component) of a mixed polyester resin obtained by so mixing the aqueous dispersion solution (solid component concentration: 30 wt%) of the polyester resin (A) and the aqueous dispersion solution of the polyester resin (B) that the solid component mass ratio thereof was 30:70, 30 parts of an n-butanol solution of the resol type phenol resin (15 parts of the solid component), one part of the dedecylbenzenesulfonic acid (curing catalyst), 0.3 parts of a trimethylamine, 200 parts of a 2-propanol, and 635 parts of ion-exchanged water. As the dodecylbenzenesulfonic acid, use was made of the "dodecylbenzenesulfonic acid (soft type) (mixture)" produced by Tokyo Kasei Kogyo Co.

(Reference Example 11)

An aqueous coating composition was prepared in the same manner as in Reference Example 10 but adjusting the amount of the n-butanol solution that is the curing agent and the amount of the ion-exchanged water so that the solid component blending ratio was polyester resin/curing agent = 100/5 (mass ratio) in the aqueous coating composition.

Tables 1, 2 and 3 show the aqueous coating compositions (kinds of polyester resins, kinds of curing agents, solid component blending ratios), coating conditions (firing temperatures, firing times, coating thicknesses), and results of evaluation.

Table 1

| | | | Tg (°C) | Acid value (mgKOH/g) | Mn | Example | | | | | | | | | | | | | |
|---|---|---|---|---|---|---|---|---|---|---|---|---|---|---|---|---|---|---|---|
| | | | | | | 1 | 2 | 3 | 4 | 5 | 6 | 7 | 8 | 9 | 10 | 11 | 12 | 13 | 14 |
| Aqueous coating composition | Polyester resin | a | 80 | 23 | 7,500 | 100 | | | | | | 60 | 70 | | 100 | 100 | 100 | 100 | 100 |
| | | b | 67 | 18 | 9,000 | | 100 | | | | | | | 50 | | | | | |
| | | c | 40 | 17 | 8,500 | | | 100 | | | | | | | | | | | |
| | | d | 20 | 11 | 17,000 | | | | 100 | | | 40 | | | | | | | |
| | | e | 8 | 12 | 19,000 | | | | | | | | | 50 | | | | | |
| | | f | -25 | 12 | 17,000 | | | | | | | | 30 | | | | | | |
| | | g | 40 | 29 | 5,000 | | | | | 100 | | | | | | | | | |
| | | h | 52 | 5 | 17,000 | | | | | | 100 | | | | | | | | |
| | | i | 40 | 61 | 7,000 | | | | | | | | | | | | | | |
| | | j | 60 | 88 | 8,000 | | | | | | | | | | | | | | |
| | | k | 54 | 1 | 16,000 | | | | | | | | | | | | | | |
| | | Tg$_{mix}$ (°C) | | | | – | – | – | – | – | – | 53 | 40 | 33 | – | – | – | – | – |
| | Curing agent | β-hydroxyalkylamide A | | | | 5 | 5 | 5 | 5 | 5 | 5 | 5 | 5 | 5 | 2 | 8 | 10 | 1 | 15 |
| | | β-hydroxyalkylamide B | | | | | | | | | | | | | | | | | |
| | | phenol resin | | | | | | | | | | | | | | | | | |
| Coating condition | firing temperature (°C) | | | | | 260 | 260 | 260 | 260 | 260 | 260 | 260 | 260 | 260 | 260 | 260 | 260 | 260 | 260 |
| | firing time (sec.) | | | | | 60 | 60 | 60 | 60 | 60 | 60 | 60 | 60 | 60 | 60 | 60 | 60 | 60 | 60 |
| | coating thickness (µm) | | | | | 1.5 | 1.5 | 1.5 | 1.5 | 1.5 | 1.5 | 1.5 | 1.5 | 1.5 | 1.5 | 1.5 | 1.5 | 1.5 | 1.5 |
| Evaluation | curability | | | | | ◎ | ◎ | ◎ | ○ | ◎ | △ | ◎ | ◎ | ◎ | ◎ | ◎ | ○ | △ | △ |
| | workability | | | | | ◎ | ◎ | ◎ | ◎ | ◎ | ○ | ◎ | ◎ | ◎ | ◎ | ◎ | ○ | ○ | △ |
| | corrosion resistance | | | | | ○ | ○ | ○ | ○ | ○ | ○ | ◎ | ◎ | ◎ | ○ | ○ | ○ | ○ | △ |

Table 1 (continued)

| | | | Tg (°C) | Acid value (mgKOH/g) | Mn | Example | | | | | | | | Comparative Example | | | Reference Example | | |
|---|---|---|---|---|---|---|---|---|---|---|---|---|---|---|---|---|---|---|---|
| | | | | | | 15 | 16 | 17 | 18 | 19 | 20 | 21 | 22 | 1 | 2 | 3 | 1 | 2 | 3 |
| Aqueous coating composition | Polyester resin | a | 80 | 23 | 7,500 | 100 | 100 | 100 | 100 | | 100 | 80 | | | | | | 100 | 100 |
| | | b | 67 | 18 | 9,000 | | | | | 100 | | | | | | | 100 | | |
| | | c | 40 | 17 | 8,500 | | | | | | | | 100 | | | | | | |
| | | d | 20 | 11 | 17,000 | | | | | | | | | | | | | | |
| | | e | 8 | 12 | 19,000 | | | | | | | | | | | | | | |
| | | f | -25 | 12 | 17,000 | | | | | | | 20 | | | | | | | |
| | | g | 40 | 29 | 5,000 | | | | | | | | | | | | | | |
| | | h | 52 | 5 | 17,000 | | | | | | | | | | | | | | |
| | | i | 40 | 61 | 7,000 | | | | | | | | | 100 | | | | | |
| | | j | 60 | 88 | 8,000 | | | | | | | | | | 100 | | | | |
| | | k | 54 | 1 | 16,000 | | | | | | | | | | | 100 | | | |
| | | $Tg_{mix}$ (°C) | | | | – | – | – | – | – | – | 52 | – | – | – | – | – | – | – |
| | Curing agent | β-hydroxyalkylamide A | | | | | 5 | 5 | 5 | 5 | 5 | | 5 | 5 | 5 | 5 | 5 | | |
| | | β-hydroxyalkylamide B | | | | 5 | | | | | | 5 | | | | | | | |
| | | phenol resin | | | | | | | | | | | | | | | | 15 | 5 |
| Coating condition | firing temperature (°C) | | | | | 260 | 250 | 230 | 230 | 280 | 300 | 210 | 260 | 260 | 260 | 260 | 200 | 260 | 260 |
| | firing time (sec.) | | | | | 60 | 30 | 30 | 60 | 20 | 15 | 120 | 60 | 60 | 60 | 60 | 60 | 60 | 60 |
| | coating thickness (μm) | | | | | 1.5 | 1.5 | 1.5 | 1.5 | 1.5 | 1.5 | 1.5 | 15 | 1.5 | 1.5 | 1.5 | 1.5 | 1.5 | 1.5 |
| Evaluation | curability | | | | | ◎ | ○ | △ | ◎ | ○ | ○ | ◎ | ◎ | ◎ | ◎ | × | × | ◎ | × |
| | workability | | | | | ◎ | ◎ | ○ | ◎ | ◎ | ◎ | ◎ | ◎ | × | × | × | ○ | × | ○ |
| | corrosion resistance | | | | | ○ | ○ | ○ | ○ | ○ | ○ | ◎ | ◎ | △ | × | ○ | ○ | ○ | ○ |

Table 2

| | | | Tg (°C) | Acid value (mgKOH/g) | Mn | Example | |
|---|---|---|---|---|---|---|---|
| | | | | | | 23 | 24 |
| Aqueous coating composition | Polyester resin | a | 80 | 23 | 7,500 | 80 | 80 |
| | | b | 67 | 18 | 9,000 | | |
| | | c | 40 | 17 | 8,500 | | |
| | | d | 20 | 11 | 17,000 | | |
| | | e | 8 | 12 | 19,000 | | |
| | | f | -25 | 12 | 17,000 | 20 | 20 |
| | | g | 40 | 29 | 5,000 | | |
| | | h | 52 | 5 | 17,000 | | |
| | | i | 40 | 61 | 7,000 | | |
| | | j | 60 | 88 | 8,000 | | |
| | | k | 54 | 1 | 16,000 | | |
| | | Tgmix (°C) | | | | 52 | 52 |
| | Curing agent | β-hydroxyalkylamide A | | | | 5 | |
| | | β-hydroxyalkylamide B | | | | | 5 |
| | | phenol resin | | | | | |
| Coating condition | firing temperature (°C) | | | | | 260 | 260 |
| | firing time (sec.) | | | | | 60 | 60 |
| | coating thickness (μm) | | | | | 1.5 | 1.5 |
| Evaluation | Retort resistance | | | | | Δ | ◎ |

Table 3

| | | | Tg (°C) | Acid value (mgKOH/g) | Mn | Example | | | | | | | | | | | | | |
|---|---|---|---|---|---|---|---|---|---|---|---|---|---|---|---|---|---|---|---|
| | | | | | | 25 | 26 | 27 | 28 | 29 | 30 | 31 | 32 | 33 | 34 | 35 | 36 | 37 | 38 |
| Aqueous coating composition | Polyester resin (A) | (A)-a | 52 | 5 | 17,000 | 50 | 50 | 70 | 80 | 20 | 30 | 40 | 60 | 80 | 50 | 90 | | | |
| | | (A)-b | 65 | 8 | 15,000 | | | | | | | | | | | | 50 | | |
| | | (A)-c | 16 | 12 | 11,000 | | | | | | | | | | | | | 50 | |
| | | (A)-d | -25 | 11 | 17,000 | | | | | | | | | | | | | | 30 |
| | Polyester resin (B) | (B)-a | 80 | 23 | 7,500 | 50 | 50 | 30 | 20 | | | | | | | | | | 70 |
| | | (B)-b | 80 | 36 | 8,000 | | | | | 80 | 70 | 60 | 40 | 20 | | | | | |
| | | (B)-c | 67 | 18 | 9,000 | | | | | | | | | | 50 | | 50 | 50 | |
| | | (B)-d | 46 | 50 | 3,000 | | | | | | | | | | | 10 | | | |
| | | difference in the acid value (mgKOH/g) | | | | 18 | 18 | 18 | 18 | 31 | 31 | 31 | 31 | 31 | 13 | 45 | 10 | 6 | 12 |
| | | Avmix (mgKOH/g) | | | | 14.0 | 14.0 | 10.4 | 8.6 | 29.8 | 26.7 | 23.6 | 17.4 | 11.2 | 11.6 | 9.5 | 13.0 | 15.0 | 19.4 |
| | | Tgmix (°C) | | | | 65.4 | 65.4 | 59.9 | 57.2 | 74 | 71.1 | 68.2 | 62.6 | 57.2 | 59.3 | 51.4 | 66 | 39.4 | 40.2 |
| | Curing agent | β-hydroxyalkylamide A | | | | 5 | | | | | | | | | | | | | |
| | | β-hydroxyalkylamide B | | | | | 5 | 5 | 5 | 5 | 5 | 5 | 5 | 5 | 5 | 5 | 5 | 5 | 5 |
| | | phenol resin | | | | | | | | | | | | | | | | | |
| | Additive | tannic acid | | | | | | | | | | | | | | | | | |
| Coating condition | | firing temperature (°C) | | | | 250 | 250 | 250 | 250 | 250 | 250 | 250 | 250 | 250 | 250 | 250 | 250 | 250 | 250 |
| | | firing time (sec.) | | | | 75 | 75 | 75 | 75 | 75 | 75 | 75 | 75 | 75 | 75 | 75 | 75 | 75 | 75 |
| | | coating thickness (μm) | | | | 1.5 | 1.5 | 1.5 | 1.5 | 1.5 | 1.5 | 1.5 | 1.5 | 1.5 | 1.5 | 1.5 | 1.5 | 1.5 | 1.5 |
| Evaluation | | Curability | | | | A | A | B | C | A | A | A | A | B | B | C | A | A | A |
| | | Workability | | | | A | A | A | A | B | A | A | A | A | A | C | A | C | A |

Table 3 (continued)

| | | | | | Example | | | | | Reference Example | | | | | | | |
|---|---|---|---|---|---|---|---|---|---|---|---|---|---|---|---|---|---|
| | | Tg (°C) | Acid value (mgKOH/g) | Mn | 39 | 40 | 41 | 42 | 43 | 4 | 5 | 6 | 7 | 8 | 9 | 10 | 11 |
| Aqueous coating composition — Polyester resin (A) | (A)-a | 52 | 5 | 17,000 | | | 30 | 30 | | 100 | | | | | | | |
| | (A)-b | 65 | 8 | 15,000 | | | | | | | 100 | | | | | | |
| | (A)-c | 16 | 12 | 11,000 | | | | | | | | | | | | | |
| | (A)-d | -25 | 11 | 17,000 | 20 | 10 | | | 30 | | | | | | | 30 | 30 |
| Aqueous coating composition — Polyester resin (B) | (B)-a | 80 | 23 | 7,500 | 80 | 90 | | | 70 | | | 100 | | | | 70 | 70 |
| | (B)-b | 80 | 36 | 8,000 | | | 70 | 70 | | | | | 100 | | | | |
| | (B)-c | 67 | 18 | 9,000 | | | | | | | | | | 100 | | | |
| | (B)-d | 46 | 50 | 3,000 | | | | | | | | | | | 100 | | |
| difference in the acid value (mgKOH/g) | | | | | 12 | 12 | 31 | 31 | 12 | - | - | - | - | - | - | 12 | 12 |
| Avmix (mgKOH/g) | | | | | 20.6 | 21.8 | 26.7 | 26.7 | 19.4 | - | - | - | - | - | - | 19.4 | 19.4 |
| Tgmix (°C) | | | | | 52.4 | 65.7 | 71.1 | 71.1 | 40.2 | - | - | - | - | - | - | 40.2 | 40.2 |
| Curing agent — β-hydroxyalkylamide A | | | | | 5 | 5 | | | 5 | 5 | 5 | 5 | 5 | 5 | 5 | | |
| Curing agent — β-hydroxyalkylamide B | | | | | | | 3 | 7 | | | | | | | | | |
| Curing agent — phenol resin | | | | | | | | | | | | | | | | | 5 |
| Additive — tannic acid | | | | | | | | | 1 | | | | | | | 15 | |
| Coating condition — firing temperature (°C) | | | | | 250 | 250 | 250 | 250 | 250 | 250 | 250 | 250 | 250 | 250 | 250 | 250 | 250 |
| Coating condition — firing time (sec.) | | | | | 75 | 75 | 75 | 75 | 75 | 75 | 75 | 75 | 75 | 75 | 75 | 75 | 75 |
| Coating condition — coating thickness (µm) | | | | | 1.5 | 1.5 | 1.5 | 1.5 | 1.5 | 1.5 | 1.5 | 1.5 | 1.5 | 1.5 | 1.5 | 1.5 | 1.5 |
| Evaluation — Curability | | | | | A | A | A | A | A | D | D | D | D | D | D | A | D |
| Evaluation — Workability | | | | | A | B | A | A | A | B | A | D | D | D | D | D | B |

Industrial Applicability:

The aqueous coating composition of the present invention is capable of forming a coating that has excellent workability, curability and corrosion resistance. Therefore, the aqueous coating composition of the invention can be favorably used for the metal cans and the can lids by being applied onto the inner surfaces and the outer surfaces thereof.

**Claims**

1. An aqueous coating composition including a polyester resin having an acid value of not less than 5 mgKOH/g but less than 30 mgKOH/g and a curing agent having a functional group capable of undergoing a crosslinking reaction with a carboxyl group possessed by said polyester resin.

2. The aqueous coating composition according to claim 1, wherein said functional group is at least the one selected from $\beta$-hydroxyalkylamide group, epoxy group and oxazoline group.

3. The aqueous coating composition according to claim 1 or 2, wherein said curing agent is a $\beta$-hydroxyalkylamide compound.

4. The aqueous coating composition according to claim 3, wherein said $\beta$-hydroxyalkylamide compound is an N,N,N',N'-tetrakis(2-hydroxyethyl) adipamide and/or an N,N,N',N'-tetrakis(2-hydroxypropyl) adipamide.

5. The aqueous coating composition according to claim 1, wherein said curing agent has the functional group equivalent of 30 to 500 g/eq.

6. The aqueous coating composition according to claim 1, wherein said curing agent has a molecular weight of not more than 1,000.

7. The aqueous coating composition according to claim 1, wherein an amount of a solid component of said curing agent that is blended is 1 to 10 parts by mass per 100 parts by mass of the solid component of said polyester resin.

8. The aqueous coating composition according to claim 1, wherein said polyester resin is a mixed polyester resin containing a polyester resin (A) and a polyester resin (B) having an acid value larger than that of said polyester resin (A), and a difference in the acid value between said polyester resin (A) and said polyester resin (B) is not less than 5 mgKOH/g.

9. The aqueous coating composition according to claim 8, wherein said polyester resin (A) has an acid value of 3 to 20 mgKOH/g, said polyester resin (B) has an acid value of 10 to 60 mgKOH/g, and a solid component mass ratio of said polyester resin (A) and said polyester resin (B) is (A) : (B) = 95 : 5 to 5 : 95.

10. The aqueous coating composition according to claim 1, wherein said polyester resin is a mixed polyester resin containing a polyester resin ($\alpha$) having a glass transition temperature (Tg) of 35°C to 100°C and a polyester resin ($\beta$) having a Tg of -30°C to 25°C, and a solid component mass ratio of said polyester resin ($\alpha$) and said polyester resin ($\beta$) is ($\alpha$) : ($\beta$) = 98 : 2 to 10 : 90.

11. A coated metal sheet having a coating of the aqueous coating composition of claim 1 formed one at least one surface thereof.

12. A coated metal container having a coating of the aqueous coating composition of claim 1 formed thereon.

13. A method of producing a coated metal base material, including steps of:

    coating a metal base material with the aqueous coating composition that includes the polyester resin having the acid value of not less than 5 mgKOH/g but less than 30 mgKOH/g and the curing agent having the functional group capable of undergoing the crosslinking reaction with the carboxyl group possessed by said polyester resin; and
    firing said aqueous coating composition with which the metal base material is coated in the step of coating at a temperature which is higher than 200°C but is not higher than 320°C.

14. The method of producing the coated metal base material according to claim 13, wherein said curing agent is the $\beta$-hydroxyalkylamide compound.

15. The method of producing the coated metal base material according to claim 13 or 14, wherein said metal base material is a metal sheet or a metal can.

## INTERNATIONAL SEARCH REPORT

International application No.

PCT/JP2018/018208

### A. CLASSIFICATION OF SUBJECT MATTER
Int.Cl. C09D167/00(2006.01)i, B05D7/14(2006.01)i, B05D7/24(2006.01)i,
 C09D5/02(2006.01)i

According to International Patent Classification (IPC) or to both national classification and IPC

### B. FIELDS SEARCHED

Minimum documentation searched (classification system followed by classification symbols)
Int.Cl. C09D167/00, B05D7/14, B05D7/24, C09D5/02

Documentation searched other than minimum documentation to the extent that such documents are included in the fields searched
Published examined utility model applications of Japan      1922–1996
Published unexamined utility model applications of Japan    1971–2018
Registered utility model specifications of Japan            1996–2018
Published registered utility model applications of Japan    1994–2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-514370 A (DOW GLOBAL TECHNOLOGIES LLC.) 19 June 2014, claims, paragraphs [0002], [0049]-[0052], [0058], [0064], [0070], [0084], [0086], [0102], examples & US 2014/0011018 A1, claims, paragraphs [0002], [0049]-[0052], [0058], [0064], [0070], [0084], [0086], table 1, examples & WO 2012/118500 A1 & EP 2681260 A1 & CN 103502322 A & KR 10-2014-0020884 A | 1-9, 11-15 |

☒  Further documents are listed in the continuation of Box C.         ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 July 2018 (02.07.2018) | 17 July 2018 (17.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

23

**EP 3 623 435 A1**

**INTERNATIONAL SEARCH REPORT**

International application No.

PCT/JP2018/018208

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2003-321646 A (TOYO SEIKAN CO., LTD.) 14 November 2003, claims, paragraphs [0026]-[0028], [0039], examples (Family: none) | 1-2, 5-7, 11-13, 15 |
| X | JP 2005-194494 A (KANSAI PAINT CO., LTD.) 21 July 2005, claims, paragraphs [0030], [0039], [0072], examples (Family: none) | 1-2, 5-7, 11-13, 15 |
| X | JP 2004-107568 A (UNITIKA LTD.) 08 April 2004, claims, paragraphs [0029], [0041]-[0042], [0065], [0095], examples (Family: none) | 1-2, 5-7, 11-13, 15 |
| X | JP 2004-339493 A (KANSAI PAINT CO., LTD.) 02 December 2004, claims, paragraphs [0036], [0054], examples (Family: none) | 1, 5-7, 11-13, 15 |
| X | JP 2008-007627 A (DAINIPPON INK AND CHEMICALS, INCORPORATED) 17 January 2008, claims, paragraphs [0027], [0036], examples (Family: none) | 1-2, 5-6, 11-13, 15 |
| X | JP 2013-249376 A (TOYO SEIKAN CO., LTD.) 12 December 2013, claims, paragraphs [0027], [0031] & US 2015/0125643 A1, claims, paragraphs [0065], [0071]-[0073] & WO 2013/180067 A1 & EP 2857465 A1 & CN 104379687 A & KR 10-2015-0016950 A | 1, 5-13, 15 |
| A | JP 51-017970 A (ROHM AND HAAS COMPANY) 13 February 1976, claims & US 4138541 A, claims & US 4115637 A & US 4101606 A & US 4076917 A | 1-15 |
| X | JP 2003-026992 A (KANSAI PAINT CO., LTD.) 29 January 2003, claims (Family: none) | 1-15 |

Form PCT/ISA/210 (continuation of second sheet) (January 2015)

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4228585 B

- JP 2003026992 A

**Non-patent literature cited in the description**

- *CHEMICAL ABSTRACTS,* 6334-25-4

- *CHEMICAL ABSTRACTS,* 57843-53-5